Europäisches Patentamt

European Patent Office

Office européen des brevets

(19)

(11) EP 1 288 813 A1

(12) **EUROPEAN PATENT APPLICATION**

(43) Date of publication:
05.03.2003 Bulletin 2003/10

(51) Int Cl.$^7$: **G06F 17/60**

(21) Application number: 02018913.0

(22) Date of filing: 23.08.2002

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: 28.08.2001 JP 2001258554
03.12.2001 JP 2001368833

(71) Applicant: **Hitachi, Ltd.**
**Chiyoda-ku, Tokyo 101-8010 (JP)**

(72) Inventors:
• **Ichihari, Genichiro, Hitachi, Ltd.**
**Chiyoda-ku, Tokyo 100-8220 (JP)**
• **Ikeda, Yuichi, Hitachi, Ltd.**
**Chiyoda-ku, Tokyo 100-8220 (JP)**
• **Sakui, Hiroshi, Hitachi, Ltd.**
**Chiyoda-ku, Tokyo 100-8220 (JP)**
• **Abe, Kazuo, Hitachi, Ltd.**
**Chiyoda-ku, Tokyo 100-8220 (JP)**

(74) Representative: **Strehl Schübel-Hopf & Partner**
**Maximilianstrasse 54**
**80538 München (DE)**

(54) **System to calculate buisiness performance index**

(57)    A computer is used to perform the calculations of obtaining: a required capital composition (an optimum debt/equity ratio) of an invested capital with a corresponding default probability based on a probability distribution of a return on investment; a weighted average cost of capital based on the capital composition, a borrowing cost, and an equity cost; a market efficiency value added from the weighted average cost of capital based on a net operating profit after tax; a socio-environmental value added that represents, in value terms, a social contribution of an enterprise not directly listed in financial statements; and a future inspiration value by adding the socio-environmental value added to the market efficiency value added. This allows business performance to be evaluated appropriately and adequately.

FIG. 1

## EP 1 288 813 A1

**Description**

Background of the Invention

The present invention relates to a calculation system or a calculation method for providing an index used to measure performance of an entire enterprise or business units in the enterprise, or evaluate a new business to be started.

In recent years, the business circumstances surrounding enterprises have become more and more severe and uncertain and it has become important to even more properly evaluate each business of an enterprise and to appropriately evaluate the future of a new business planned so as to meet the requirement of the stockholders (investors), creditors, and the society.

The conventional business performance index system outputs some indices that are significant to business performance by making simple calculation (four-arithmetical-operations) of the value on financial statement.

Various performance measurement methods such as, for example, that known as EVA (Efficiency Value Added) are currently examined. They are, however, not necessarily capable of making an appropriate business performance evaluation and there is still a need for developing an evaluation method capable of making an even more appropriate evaluation.

The present invention is based on stochastic method and focuses on risk adjusted return.

It is intended to allow an enterprise to grow on a medium-to-long-term perspective by making an overall analysis. The overall analysis may cover: determining probability of an increased value for stockholders; certifying of value for creditors; analyzing risk profile and measuring risk amounts in developing and expanding businesses; estimating default probability; and reducing social and environmental burden. They are achieved through a correct evaluation made of business values and efficient distribution of resources within an enterprise.

Other objects of the present invention will be described in the preferred embodiments of the invention to be described later.

The present invention is characterized in that, in the first place, it obtains a required capital composition (an optimum debt/equity ratio) of an invested capital based on a probability distribution of an uncertain profit with respect to the invested capital (an investment amount).

This allows an enterprise to allocate fund within itself as efficiently as in a market, thereby obtaining a cost of capital thereof.

The cost of capital is subtracted from an operating profit to obtain an economical value added which will be referred to in this specification as market efficiency value added, or MEVA. It represents a business performance index that takes into account the shareholder and the creditor in view of uncertainty.

The invention is characterized in that, in the second place, it obtains a value added in terms of external economies by translating in value terms intangible value which is not listed in financial statements, which is referred to in this specification as socio-environmental value added, or SEVA. It represents a business performance index that takes into account the society and environment.

The invention is characterized in that, in the third place, it obtains an index that combines the market efficiency value added (MEVA) and the socio-environmental value added (SEVA). The index will be referred to in this specification as a future inspiration value, or FIV. It represents a business performance index that takes into account the environment surrounding enterprises and interest parties more widely than the conventional indices do.

The invention is characterized in other aspects to be described in the preferred embodiments of the invention to be described later.

Brief Description of the Drawings

Fig. 1 is a system flowchart showing a business performance index processing system according to an embodiment of the present invention;
Fig. 2 is a drawing showing a percentage distribution of debt and equity to achieve a target default probability;
Fig. 3 is a diagram showing each combination of a rating, a default probability, and a borrowing cost;
Fig. 4 is a diagram used for calculating an equity risk $\beta$ from a stock price and a market index;
Fig. 5 is a diagram used for calculating an equity cost;
Fig. 6 is a graph showing a past ROI distribution according to a historical method;
Fig. 7 is a graph showing a distribution for deviations between expected and actual ROIs according to the historical method;
Fig. 8 is a graph showing an ROI probability distribution;

Fig. 9 is a schematic diagram showing a relationship between exogenous variables and profit according to the simulation method;

Fig. 10 is a graph showing the probability distribution of a profit absolute value;

Fig. 11 is a graph showing a profit before tax and a cumulative profit of an investment plan;

Fig. 12 is a graph showing MEVA and a cumulative MEVA of an investment plan;

Fig. 13 is a system configuration diagram showing a business performance index processing system according to an embodiment of the present invention;

Fig. 14 is a processing operation flowchart in a business performance index processing system;

Fig. 15 is another processing operation flowchart in a business performance index processing system;

Fig. 16 is a processing operation flowchart for MEVA in a business performance index processing system;

Fig. 17 is a processing operation flowchart for SEVA and FIV in a business performance index processing system.

Fig. 18 is a processing operation flowchart of a historical method in the step 110; and

Fig. 19 is a processing operation flowchart of a simulation method in the step 110.

Description of the Preferred Embodiments

The business performance index processing system according to the present invention may be applicable to a business performance index used to measure performance of an entire enterprise or business units in the enterprise, or evaluate a new business to be started.

The business performance index processing system according to the present invention first obtains the required capital composition (the optimum debt/equity ratio) of the invested capital based on the probability distribution of return on invested capital, and obtains the cost of capital thereof. It then subtracts the cost of capital from an operating profit to obtain the market efficiency value added (MEVA) as the economical business performance index.

The system then estimates intangible value which is not listed in financial statements and not directly incorporated in price or cost, thereby obtaining the socio-environmental value added (SEVA) as the business performance index in terms of external economies.

The system then combines these two indices together to obtain the future inspiration value (FIV) that is the business performance index representing the generic value of an enterprise.

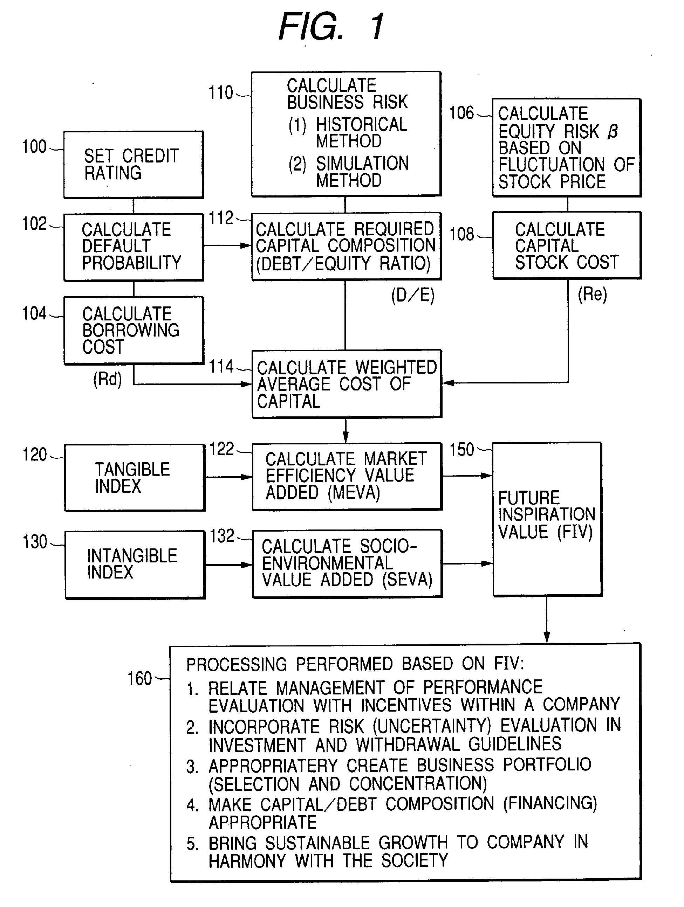

Fig. 1 is a flowchart showing a concept of a business performance index processing system according to the present invention;

The embodiment according to the present invention may comprise the following steps of evaluating the enterprise using the tangible index and intangible index. They are the steps of evaluating the market efficiency value added (MEVA) (step 122), the socio-environmental value added (SEVA) (step 132), and the future inspiration value (FIV) (step 150). It thereby provides business performance indices that relate the management of performance evaluation within a company, incorporate a risk (uncertainty) evaluation in the investment and withdrawal guidelines, appropriately create a business portfolio (selection and concentration), make the capital composition (financing) appropriate, and eventually bring a sustainable growth to the company in harmony with the society.

The calculation performed to evaluate the market efficiency value added (MEVA) will be described.

The economic value added of a business is calculated by subtracting the cost of capital invented in the business from the profit earned by the business. Namely, it is expressed as:

$$\text{Market Efficiency Value Added = Net Operating Profit}$$

$$\text{after Tax - Cost of Capital} \qquad (1)$$

The net operating profit after tax is a net profit before interest after tax as obtained from financial statements.

The cost of capital is an expense incurred in invested capital (that is, an amount of invested money required for expanding the business). The invested capital is calculated as:

$$\text{Invested Capital = Debt + Equity} \qquad (2)$$

The invested capital is therefore the sum of a fund (debt) raised as the money borrowed from financial institutions such as banks to set up and carry out the business and through issuing bonds, and a fund (equity) raised as the capital stock obtained as a result of issuing stocks or the like and retained earnings or the like. The ratio of the cost of capital to the invested capital is the weighted average cost of capital. Namely, it is expressed as:

$$\text{Cost of Capital} = \text{Weighted Average Cost of Capital} \times$$

$$\text{Invested Capital} \tag{3}$$

There are two types of cost of capital: cost for the debt included in the invested capital and cost for the equity also included in the invested capital. The weighted average cost of capital is therefore composed of a borrowing cost, such as an interest rate of borrowings, and a capital stock cost that is the expected return on equity, such as dividends paid to stockholders or an increase in retained earnings. Namely,

$$\text{Cost of Capital} = \text{Borrowing Cost} \times \text{Debt} + \text{Capital}$$

$$\text{Stock Cost} \times \text{Equity} \tag{4}$$

When the right-hand side of (3) and (4) is divided by the invested capital, we have:

$$\text{Weighted Average Cost of Capital} = \text{Borrowing Cost} \times$$

$$\text{Debt} / \text{Invested Capital} + \text{Capital Stock Cost} \times \text{Equity} /$$

$$\text{Invested Capital} \tag{5}$$

The weighted average cost of capital can be calculated by obtaining a weighted average of the borrowing cost and the capital stock cost in terms of the capital composition.

From the viewpoint of an entire enterprise, debt and equity are clearly identifiable. The borrowing cost and the equity cost are determined efficiently in the market from the relationship between risk and return, which allows the cost of capital to be obtained. The invested capital of an operating department within the enterprise, however, represents a share of the total invested capital appropriated for the operating department in question out of the total invested capital of the enterprise. In addition, because of a varying level of risk involved with each individual operating department, the weighted average cost of capital of the specific operating department is not constant.

The present invention therefore employs the following method to divide the invested capital for a business into a virtually required (optimum) debt and equity in accordance with the risk of fluctuating earnings, thereby obtaining the weighted average cost of capital of the business in question. It then uses this weighted average cost of capital to obtain the cost of capital, thereby finding the economical value added of the business. This index is called the market efficiency value added (MEVA), since it brings market efficiency into the inside of the enterprise.

From equations (1) and (3), we have:

$$\text{Market Efficiency Value Added} = (\text{Net Operating Profit}$$

$$\text{after Tax} / \text{Invested Capital} - \text{Weighted Average Cost of}$$

$$\text{Capital}) \times \text{Invested Capital} \tag{6}$$

The market efficiency value added (MEVA) can thus be obtained from the net operating profit after tax, invested capital, and the weighted average cost of capital. Depending on whether the ratio of the net operating profit after tax to the invested capital exceeds the weighted average cost of capital, it is determined if the invested capital can be recovered.

From equation (5), the borrowing cost, equity cost, and the capital composition are required in calculating the weighted average cost of capital.

The borrowing cost (Rd) will be described:

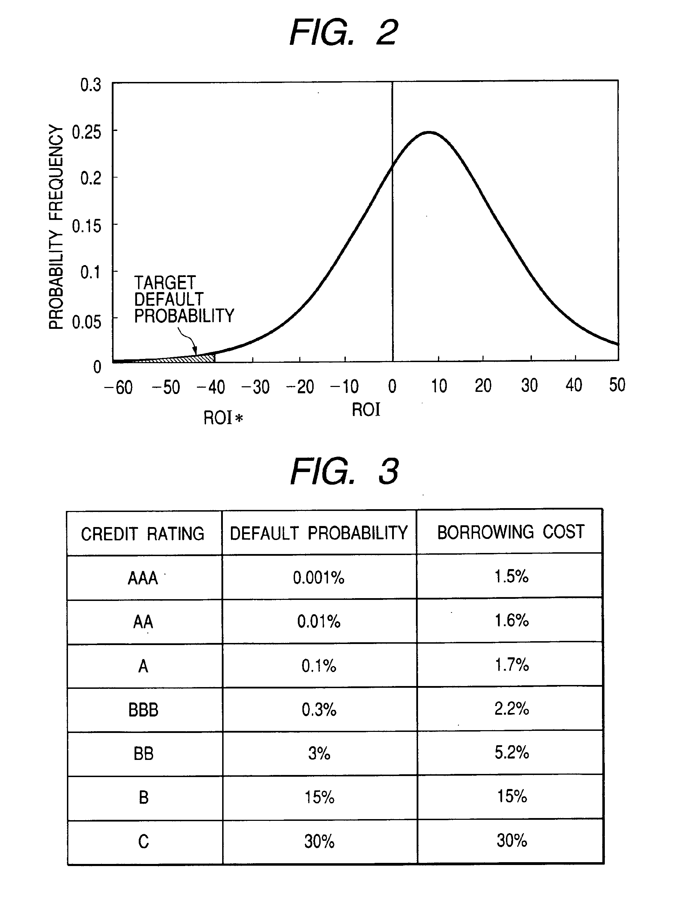

The borrowing cost is the interest of borrowings and determined by a credit rating set according to a credit risk of default probability. There is a relationship among the credit rating, default probability, and borrowing cost in enterprises. For example, an enterprise having a credit rating of "AAA" is assigned with a default probability of "0.001%" and a borrowing cost of "1.5%". An enterprise having a credit rating of "A" is assigned with a default probability of "0.1%" and a borrowing cost of "1.7%". A table of credit ratings relating to corresponding default probability and borrowing cost values as shown in Fig. 3 is created from a database that stores therein past default records and borrowing costs of different enterprises associated with each of these credit ratings.

When a target credit rating of the enterprise is set in step 100 using a correspondence table such as this one, the default probability is determined in step 102, and the borrowing cost is determined in step 104.

An exact relationship exists among the credit rating, default probability, and borrowing cost. There is no specific order of setting these parameters, although credit rating is set first in the above example. Entering any one of the credit rating, default probability, and borrowing cost will allow the remaining two parameters to be set.

The equity cost (Re) will be described.

It represents the cost for the equity (dividends to be paid to stockholders or an increase in retained earnings), having a relationship with an equity risk $\beta$.

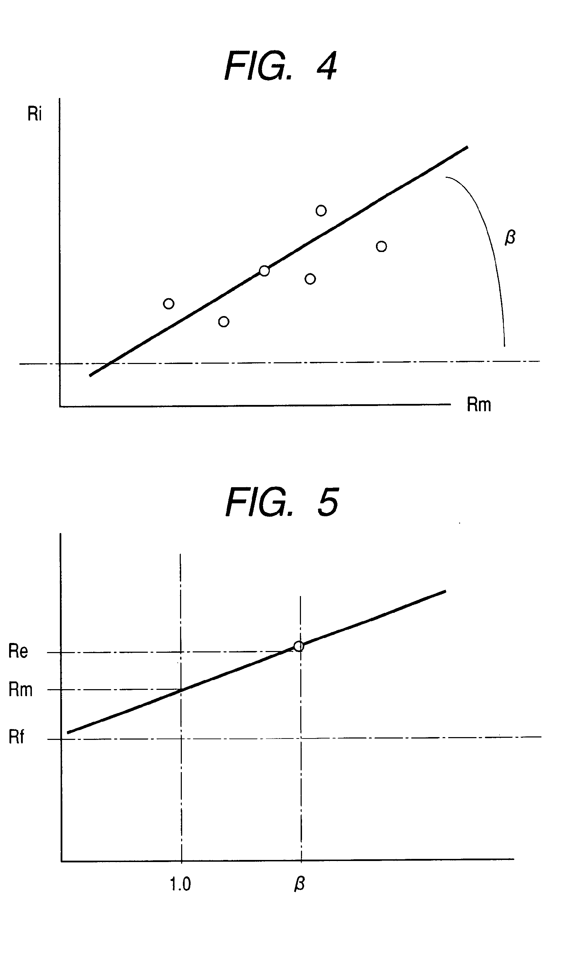

Reference is now made to Fig. 4, in which the horizontal axis represents the return for the market index (Rm) (for example, the Tokyo Stock Price Index abbreviated as TOPIX), while the vertical axis represents the return of the target enterprise (Ri) (or the per share earning ratio of a company in the same industry, if the target enterprise is not listed). For this graph, actual values are plotted at intervals of daily, weekly, or monthly for a few tens of unit periods to obtain the equity risk $\beta$ which is the gradient of the regression line. Namely, using a regression equation (7) and based on the past data of the per share earning ratio (Ri) of the target enterprise (or the per share earning ratio of a company in the same trade, if the target enterprise is not listed) and the per share earning ratio (Rm) for the market index, the equity risk $\beta$ can be obtained through calculation using the equation (8):

$$Ri = \alpha + \beta \times Rm + \varepsilon i \qquad (7)$$

$$\beta = (\text{covariance between Ri and Rm}) / (\text{variance of}$$

$$Rm) \qquad (8)$$

The equity risk $\beta$ indicates the magnitude of volatility of the stock price in question, that is, how many times as much as the volatility of the market average. The greater the risk, the much return is required, thus increasing the equity cost.

According to a capital asset pricing model (CAPM), if the equity risk values are indicated on the horizontal axis and the per share earning ratio (R) is indicated on the vertical axis as shown in Fig. 5, a risk-return line is given as a straight line.

Suppose that a risk-free rate, which is rate of return on risk-free assets such as sovereign bonds whose equity risk value is 0, is Rf and the per share earning ratio for the market index (TOPIX) whose equity risk value is 1 is Rm. Then, the return value (R) at the intersection point between the equity risk $\beta$ and the risk-return straight line would be the equity cost (Re). Namely, the following equation is given.

$$Re = Rf + \beta \times (Rm - Rf) \qquad (9)$$

Using these techniques, the value of the equity risk $\beta$ is calculated in step 106 and the capital stock cost (Re) is calculated in step 108.

The required capital composition (the optimum debt/equity ratio) of the invested capital will be described.

Even if an enterprise makes loss as a result of volatility of earnings by a business risk, it can continue business as long as the loss remains in the equity portion. If, however, the loss exceeds the equity portion, insolvency results causing the enterprise to go bankrupt. That is, there is a relationship among the earnings probability distribution, capital composition, and default probability.

According to the invention, the capital composition is obtained from the earnings probability distribution and default probability.

The required capital composition (the optimum debt/equity ratio) of the invested capital can be obtained from the earnings probability distribution.

A graph as shown in Fig. 2, in which the horizontal axis indicates the ratio of the value of profit to the invested capital (the invested amount of money) (ROI, or Return on Investment) (%) and the vertical axis indicates the probability frequency, shows a stochastic distribution curve of ROI with respect to the business risk.

Assuming that the entire area defined by the ROI stochastic distribution curve is 100% and the default probability is set, for example, at "0.1%", a point of ROI* on the loss side which defines an area of 0.1% of the entire area from the left end, is found. The area of 0.1% of the entire area indicates the probability of incurring a deficit larger than that indicated by this point. In this example, the ROI value is -40%. This means that a probability at which the enterprise (or the operating department) represented by the ROI distribution shown in Fig. 2 will go bankrupt with a deficit of 40% or more of the invested capital, is 0.1%. It therefore follows that, if the composition of the invested capital is 60% to 40% in terms of debt to equity, the default probability of bankruptcy from insolvency is 0.1%.

In step 112, the required capital composition (an optimum debt/equity ratio) is calculated as described in the foregoing. The default probability of 0.1% corresponds to a credit rating of "A", which allows the borrowing cost to be calculated as 1.7% in step 104. The equity cost is, on the other hand, calculated in step 108. Using all these calculated values, the weighted average cost of capital is calculated in step 114.

The cost of capital, which is the weighted average cost of capital calculated in step 114 multiplied by the invested capital, is subtracted from the net operating profit after tax obtained in step 120 to calculate the market efficiency value added (MEVA) in step 122.

It is necessary that the future market efficiency value added according to a business plan be evaluated by allowing for the weighted average cost of capital which is a value representing uncertainty and time. Assume that the market efficiency value added after T years from now is MEVA(T), and MEVA(T) divided by (1 + weighted average cost of capital) raised to the T-th power is the net present value. That is:

$$\text{Net Present Value} = \text{MEVA(T)} \div (1 + \text{Weighted Average Cost of Capital})^T \qquad (10)$$

The cumulative net present value (of MEVA) (cumulative MEVA), which is a cumulative total of the net present values for N years, is as follows.

$$\text{cumulative MEVA} = \sum_{T=0}^{N} (\text{MEVA(T)} \div (1 + \text{weighted average Cost of Capital})^T) \qquad \dots (11)$$

This index may be used to make a primary managerial decision-making, whether to invest or withdraw, of a possible business expansion.

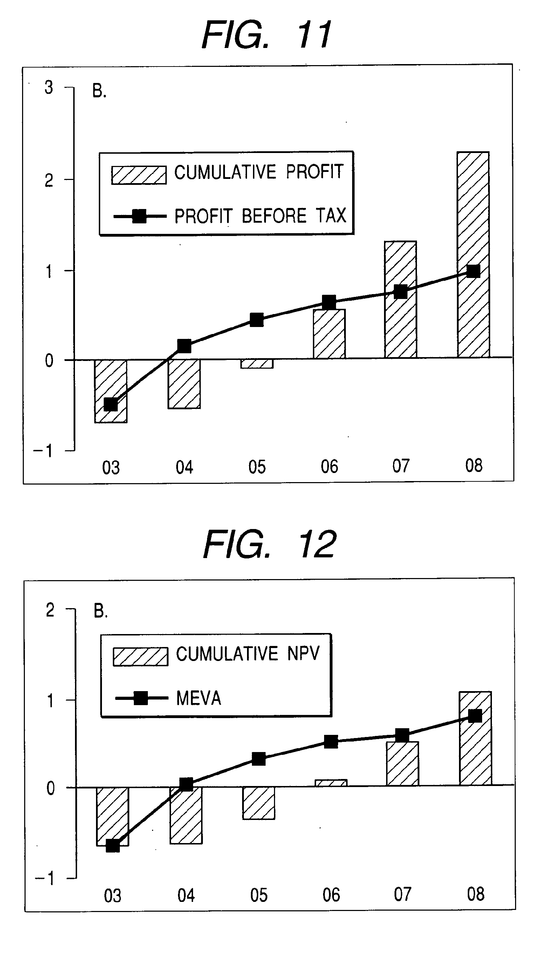

An example of making a decision for an investment plan according to the market efficiency value added (MEVA) will be given in the following. For example, an ordinary investment plan is represented by a graph shown in Fig. 11. The bar graph shows the cumulative profit, while the line graph shows the profit before tax. In the example, the profit (profit before tax) indicated by the line graph goes into the black in the second year, while the cumulative profit records a surplus four years after. The market efficiency value added (MEVA), which is the operating profit minus the cost of capital, however, is indicated on the graph as shown in Fig. 12. In the graph, the cumulative MEVA is smaller and recovery time is later. Employing the cumulative MEVA that takes into account the future uncertainty assures making an investment decision even more appropriately.

The socio-environmental value added (SEVA) will next be described.

When an enterprise tries to carry out and expand its business activities, the endeavor may have adverse effects socio-environmentally. In such cases, the enterprise may make a social contribution through volunteer and welfare activities, which can at times enhance the value of the enterprise and the business thereof in such aspects as a social image of the enterprise that are not directly reflected in prices and costs. There are known what is called in economics "external economies" and "external diseconomies" in such non-financial aspects that are not reflected in prices and costs. These aspects, although not evaluated in terms of the market efficiency value added (MEVA) since they are not directly connected to money and not directly reflected in prices and costs, help the enterprise be re-valued highly in reliability and its associated areas thanks to the enhanced social image thereof. This in turn yields promotional effects, heightening the value of the enterprise and the business thereof, which is calculated in step 130. This non-financial index is translated by the system to a corresponding value of money in step 132 and the equivalent value is called the socio-environmental value added (SEVA).

The sources of the socio-environmental value added (SEVA) are intangible assets. For example, items associated with the environment, such as the environmental management, environmentally-conscious manufacturing, environmentally-conscious production activities, and social interchange are translated in value terms for those quantitative items of the disclosed information of "environment accounting". They are the amount of $CO_2$ and other greenhouse gas emissions, industrial waste, energy saving, and recycling that are contained in the "Environmental Performance Indicators for Businesses (Fiscal Year 2000 Version)" compiled by the Ministry of the Environment (in Japan). In addition, the intangible assets in stock that may include brand value and social contribution through royalty free patent, freeware, and the like are also converted in value terms with the number of years through which the effects continue taken into consideration.

The calculation (step 150) for evaluating the future inspiration value (FIV) will be described.

The future inspiration value (FIV), which is the generic index that enhances an enterprise value, is calculated by multiplying the socio-environmental value added (SEVA) obtained in step 132 by a contribution factor ($\varepsilon$) that represents a ratio at which the SEVA contributes to the value added of the entire business and adding to it the market efficiency value added (MEVA) obtained in step 122. The management sets the contribution factor ($\varepsilon$) based on the review of two factors: one is a regression analysis of past data in terms of the relationship between the socio-environmental value added and the market efficiency value added and shareholder value; and the other is the degree of current and future interest in the socio-environmental value added as investigated through questionnaire or the like. Namely, the following equation is given.

$$\text{Future Inspiration Value} = \text{MEVA} + \varepsilon \times \text{SEVA} \tag{12}$$

When the future inspiration value (FIV) is obtained through the steps as described in the foregoing, it helps make an even more accurate decision of a choice of investment or withdrawal, based on the additional decisions provided by the cumulative MEVA and real option.

The calculation of a business risk (step 110) will be described. The probability distribution of ROI (profit/invested capital) of the business in question is obtained through a historical method, a simulation method, an RVM method, and the like.

The calculation of the probability distribution of ROI (return on invested capital) using the historical method will be first described. The historical method combines the following three distribution patterns to obtain the probability distribution of a future ROI (return on invested capital).

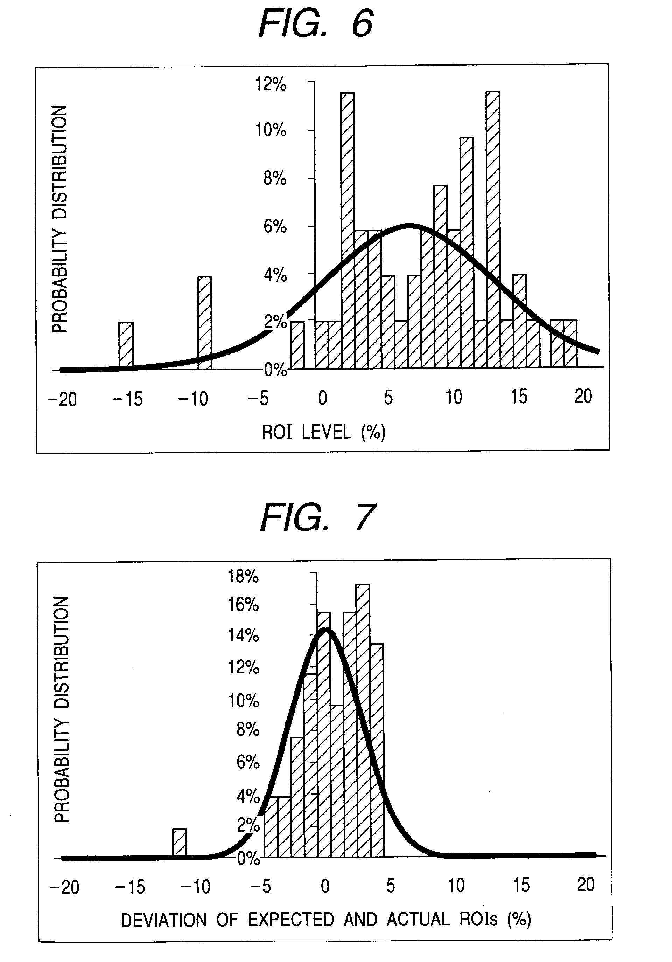

The first of the three distribution patterns is the past ROI distribution (a profit risk) as shown in Fig. 6. The example uses 50 readings of data of every half-term period during the past 25 years to show a frequency distribution in a bar graph. Based on this frequency distribution, a curve of a probability density function (for example, a normal distribution) approximating the distribution is obtained.

The second of the three distribution patterns is the distribution for deviations between expected and actual ROIs (an estimated risk) as shown in Fig. 7. It shows the distribution of deviations between the expected and the actual ROIs in the form of a bar graph. The graph shows a distribution of frequencies of the case of the estimate achieved placed on the right-hand side (+ side) of the graph and that of the estimate not achieved placed on the left-hand side (- side) with a zero point of the vertical axis as the boundary. Based on this frequency distribution, a curve of the probability density function (for example, normal distribution) that approximates the distribution is obtained. The distribution for deviations between expected and actual ROIs as that shown in Fig. 7 represents an error in achieving the plan.

As the third distribution pattern, the planned ROI for the business in question is input.

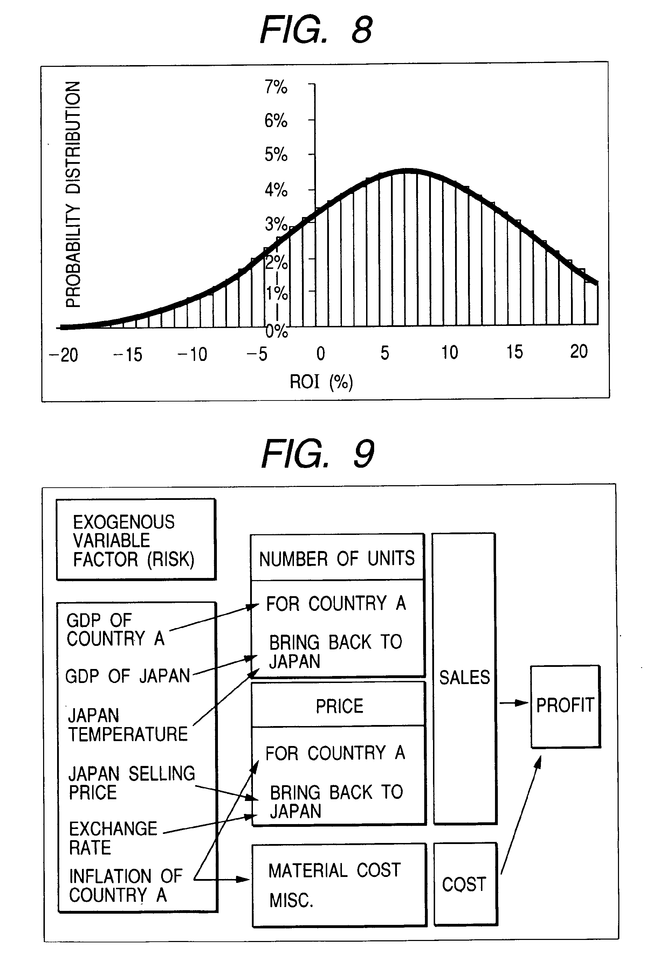

Based on these three inputs, the profit risk and the estimated risk are combined with the planned value at the center, thereby obtaining a probability distribution of the future ROI. For example, by combining the ROI distribution based on the past records (the profit risk) shown in Fig. 6, the distribution for deviations between expected and actual ROIs (the estimated risk) shown in Fig. 7, and the future ROI plan (for example, 8%), the ROI distribution as shown in Fig. 8 is obtained.

The calculation of probability distribution of ROI (return on invested capital) using the simulation method will next be described. The simulation method uses a computer model of a business plan for the business in question. Using the following equation,

$$\text{Profit} = f \text{ (Exogenous Variables of Management)} \tag{13}$$

(For example, Profit = Market Size x Market Share x Selling Price - Manufacturing Cost)

The simulation method then inputs the probability distribution in uncertain exogenous variables, and performs the Monte Carlo simulation to estimate the probability distribution function for the profit and ROI.

Fig. 9 is a schematic diagram showing, for example, how exogenous variable factors (risks) are taken into consideration for an enterprise to be started in a country A. Namely, the sales and cost determine the profit, and the number of units and price determine the sales. The material cost and other factors determine the cost. In this business, the economic activities of the country A and country B will affect the business in question as exogenous variable factors (risks).

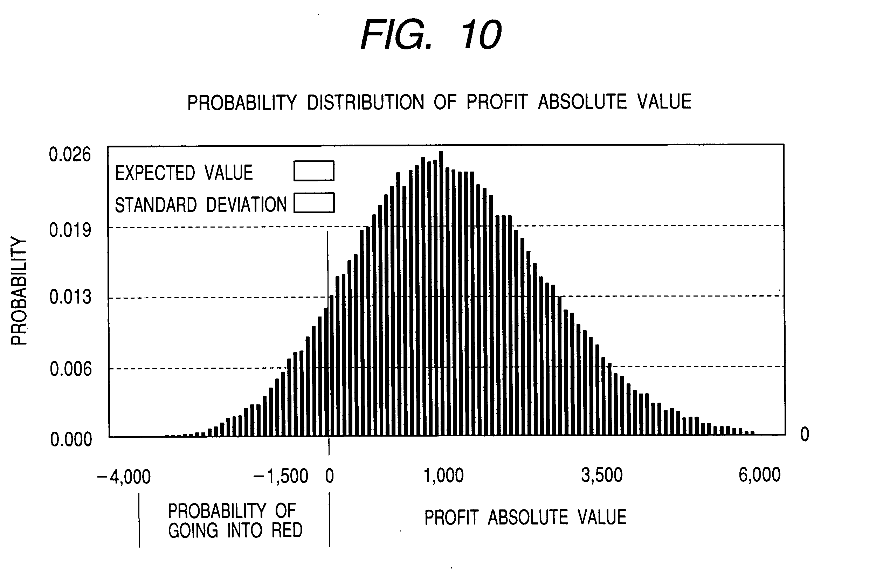

Taking uncertainty of business environment into account and performing the Monte Carlo simulation with the past probability distribution input in exogenous variables will allow the profit to be corrected by volatilitys in the exchange rate and commodity prices and produce an output of a graph as shown in Fig. 10 that shows the probability distribution with respect to the profit absolute value indicated on the horizontal axis. This provides the ROI distribution as shown in Fig. 8.

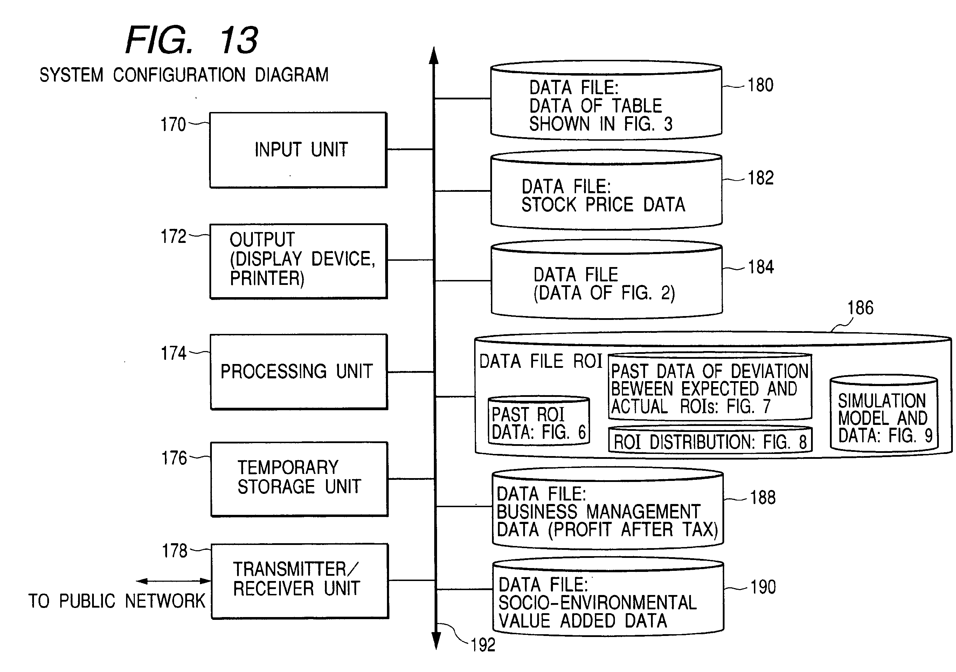

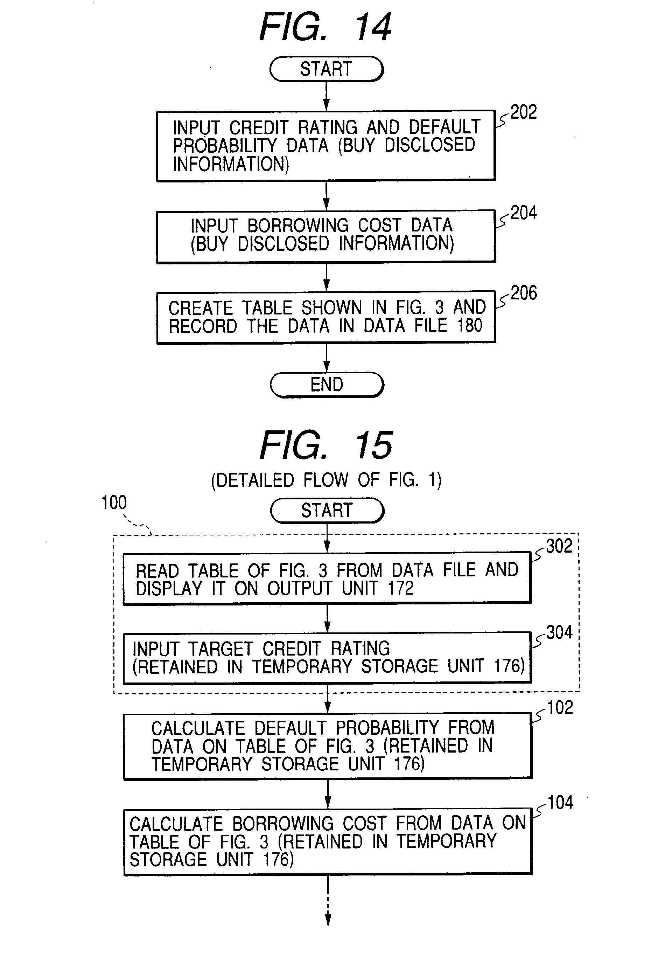

The system and processing operations thereof will be described with reference to the system configuration diagram for implementing a business performance index processing system shown in Fig. 13 and detailed flowcharts shown in Figs. 14 through 19.

The system shown in Fig. 13 is what is called a computer system, comprising an input unit 170, an output unit 172, a processing unit 174, a temporary storage unit 176, a transmitter/receiver unit, and a storage unit storing various types of data files 180 to 190, all connected to a bus 192.

The input unit 170 is an input means of a known personal computer, or PC, provided with keys for data entry or a mouse. It may further include a reader for recording a medium such as a CD. The output unit 172 is a display device of the PC and a printer. The processing unit 174 may be a processor of the PC or that of a server. The temporary storage unit 176 is a main memory of the PC or a server. This system may be connected by way of the transmitter/receiver unit 178 to an external site through a public network such as the Internet.

The data file 180 stores therein a table of credit ratings relating to corresponding default probability and borrowing cost values shown in Fig. 3. This table is generally created as follows. Namely, as shown in Fig. 14, credit rating data and default probability data which are disclosed by credit-rating firms are purchased and input through the input unit 170. The borrowing cost data is purchased from banks in a form created by the banks and input through the input unit 170. The processing unit 174 edits and processes the data input through the input unit 170 and the resultant processed data is stored in memory as the data file 180.

The data file 182 stores therein stock price data. The data file 184 stores data on ROI/probability distribution shown in Fig. 2. The data file 186 stores the past ROI data of Fig. 6, past data of deviation between expected and actual ROIs of Fig. 7, ROI distribution of Fig. 8, and the simulation model and data of Fig. 9. The data file 188 stores the business management data and the data file 190 stores the socio-environmental value added data.

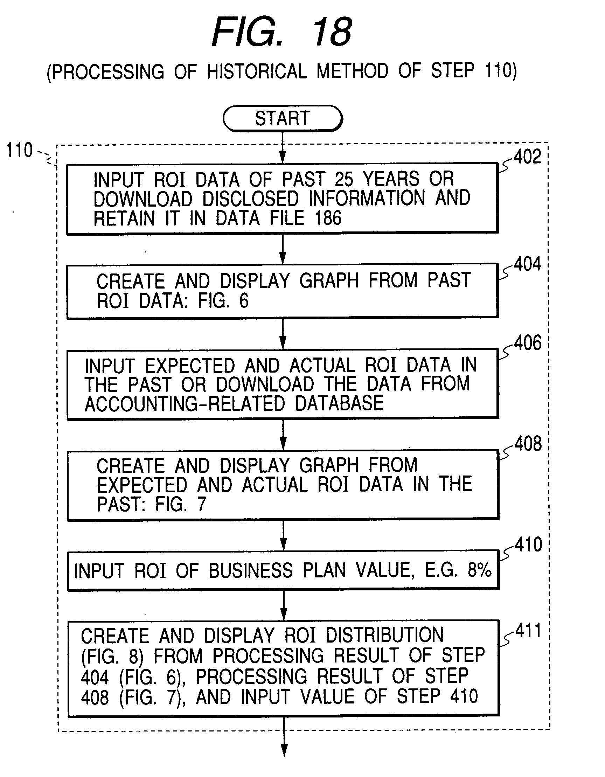

Processing according to the historical method cited in step 110 in Fig. 1 will be described with reference to Fig. 18. First of all, for example, the ROI data for the past 25 years is input through the input unit 170 or disclosed past ROI data is downloaded and stored in the data file 186 (402). The processing unit 174 creates a graph like the one shown in Fig. 6 using the past ROI data to display the graph on the display device 172 (404). The expected and actual ROI data in the past is input through the input unit 170 or the data is downloaded from an accounting-related database. The processing unit 174 then creates a graph from the expected and actual ROI data in the past to display the graph as shown in Fig. 7 on the display device of the output unit 172 (408). Data, for example 8%, is input through the input unit 174 as a business plan value (410). An ROI distribution is created from the data shown in Figs. 6 and 7, which are the results of processing performed in steps 404 and 408 to display the graph as shown in Fig. 8 on the output unit 172.

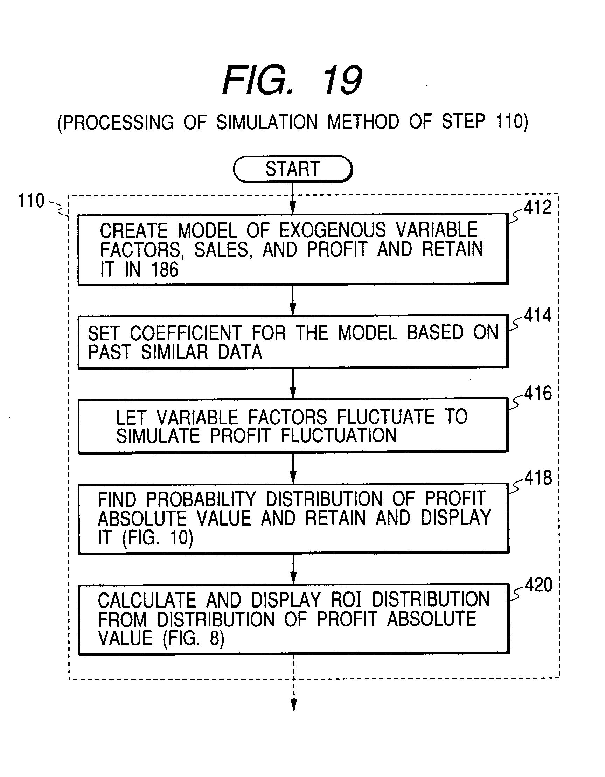

Processing according to the simulation method cited in step 110 in Fig. 1 will be described with reference to Fig. 19. The simulation method is an approach that attempts to obtain ROI through projection into the future. Referring to Fig. 9, a model of an exogenous variable factor, sales, and profit is created and stored in the data file 186 (412). A coefficient for the model is next determined based on past similar data (414). The variable factors are then made to volatile so as to simulate profit volatility (416). A probability distribution of an absolute value of profit is thereafter found and retained. At the same time, the output unit 172 displays a graph as shown in Fig. 10 (418). The processing unit 174 then calculates an ROI distribution from the distribution of the profit absolute value to display on the output unit 174 a result thereof in a form as shown in Fig. 8 (420).

Processing for calculation of the borrowing cost shown in Fig. 1 will be described with reference to Fig. 15. The tabulated data of Fig. 3 is read from the data file 180 for setting of credit rating and displayed on the output unit 172 (302). The credit rating is then input through the input unit 170. It is temporarily stored in the temporary storage unit 176 (304). The processing unit 174 next calculates the default probability from the tabulated data of Fig. 3. The result thereof is temporarily retained in the temporary storage unit 176 (102). The processing unit 174 then calculates the borrowing cost from the tabulated data of Fig. 3.

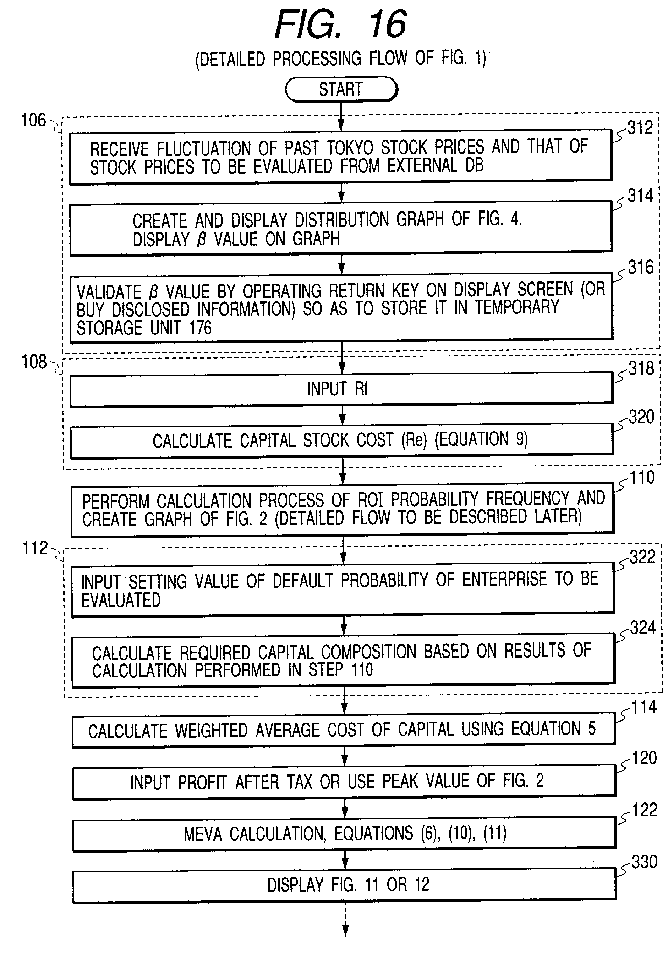

Calculation of the market efficiency value added (MEVA) will be described with reference to Fig. 16. To calculate the equity risk β from volatility of the stock prices (step 106), volatility of past Tokyo stock prices and that of the stock prices to be evaluated are obtained from an external database through the transmitter/receiver unit 178 (312). While this data is stored in the data file 182, the processing unit 174 creates the distribution graph shown in Fig. 4 to display it on the output unit 172 the graph together with the β value plotted on the graph (314). The β value plotted on the graph is validated by operating a return key on the display screen. This value is stored in the temporary storage unit 176. For the calculation of the capital stock cost (step 108), the processing unit 174 calculates the capital stock cost (Re) (320) after Rf has been input (318).

For the calculation of the business risk, the processing unit 174 calculates the ROI probability distribution shown in Fig. 2 using the historical method shown in Fig. 18 or the simulation method shown in Fig. 19, and creates the graph of Fig. 2 (110).

For the calculation of the required capital composition (112), when a setting value for the default probability of the enterprise to be evaluated is entered through the input unit 170 (322), the processing unit 174 calculates the required capital composition based on the result of calculation of the business risk (110) and the default probability (102). The processing unit 174 then calculates the weighted average cost of capital according to equation (5) (114). The unit 174 further calculates MEVA using data of profit after tax acquired from the data file 188 or an accounting index such as the peak value shown in Fig. 2 entered (120). This calculation is performed in accordance with equations (6), (10), and (11) (122). The processing unit 174 creates the graph shown in Fig. 11 or 12 to show the result of the calculations performed and makes the display device of the output unit 172 display it. The results of the calculations performed by the processing unit 174 are temporarily stored in the temporary storage unit 176 at different stages in the middle of calculation processes before the output is provided for the display. Those who are involved with a business performance evaluation make an investment decision by studying the graph that is displayed. It goes without saying that the processing unit 174 may be assigned for making a decision based on the value shown in the graph of Fig. 11 or 12. For example, an arrangement is possible, in which a criterion value for business performance evaluation may be set in advance and stored in the storage unit 176. The processing unit 174 then compares a current value on the graph against the setting value to see if the former is greater or smaller than the latter, thereby providing an output to serve as an investment decision.

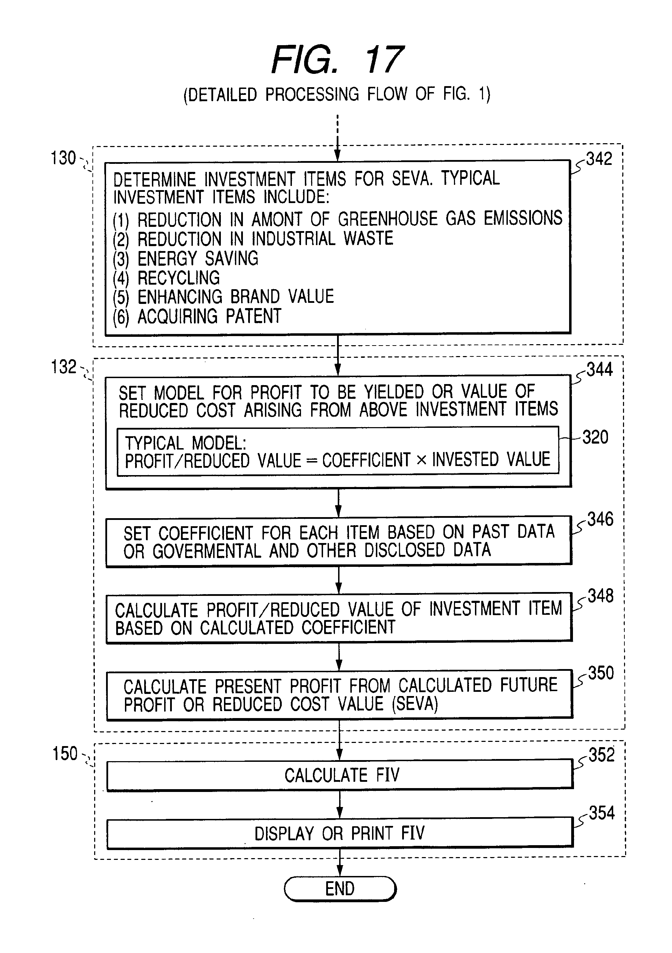

Processing for SEVA and FIV will be described with reference to Fig. 17.

Processing is performed to determine investment items of the socio-environmental value added as a non-financial index (130). Typical investment items bracketed into this category are, for example, reduction in the amount of greenhouse gas emissions, reduction in industrial waste, energy saving, recycling, enhancing a brand value, acquiring a patent, and the like. Each of these investment items is generally translated into a corresponding numerical value and input through the input unit 170. Some of these investment items go through arithmetic operations performed by the processing unit 174 before use after they have been input.

For the calculation of SEVA (132), a model is set for a profit to be yielded in the future or a value of reduced cost arising from the above investment items (344). A typical model is, for example, calculation of profit/reduced value = coefficient x invested value (320). The coefficient for each item is set based on past data or governmental and other disclosed data (346). When the corresponding coefficient is calculated and set for each investment item, the processing unit 174 calculates profit/reduced value of the item based on the corresponding coefficient (348). The processing unit 174 then performs arithmetic operations to find a current profit from the calculated future profit or the reduced cost value (350). This allows SEVA to be calculated.

Calculation of the future inspiration value (FIV) is next calculated (150). The processing unit 174 performs an arithmetic operation according to the equation (12) (352) and the result thereof is displayed or printed on the output unit 172 (354).

Those who make a business performance evaluation refer to the FIV, as the result of this output, and make a decision to invest or withdraw. It is nonetheless possible to let the processing unit 174 make the investment or withdrawal decision. For example, a criterion value for business performance evaluation may be set in advance and stored in the storage unit 176. The processing unit 174 then compares the FIV, or the calculation result, with the setting value to see if the former is greater or smaller than the latter.

As described in the foregoing, the business performance index processing system according to the present invention can accomplish the following task. Namely, it provides business performance indices that relate the management of performance evaluation with incentives within a company, incorporate a risk (uncertainty) evaluation in the investment and withdrawal guidelines, appropriately create a business portfolio (selection and concentration), make the capital composition (financing) appropriate, and eventually bring a sustainable growth to the company in harmony with the society.

Furthermore, according to the calculation system of the present invention, it is possible to vitalize operations within a company, determine investment or withdrawal for each business to concentrate on specific areas of businesses, ensure optimum corporate finance, and thereby allow the company to maintain the sustainable growth in harmony with the society.

**Claims**

1. A business performance index processing system causing a computer to perform the calculations for:

    obtaining a required capital composition (an optimum debt/equity ratio) of an invested capital based on a probability distribution of return on the invested capital;
    obtaining a weighted average cost of capital based on the capital composition, a borrowing cost, and a capital stock cost; and
    obtaining market efficiency value added (MEVA) from the weighted average cost of capital and a net operating profit after tax.

2. A business performance index processing system causing a computer to perform the calculations for:

    obtaining a required capital composition (an optimum debt/equity ratio) from a credit rating, a default probability, or a borrowing cost based on a probability distribution of return on the invested capital;
    obtaining a weighted average cost of capital based on the capital composition, a borrowing cost, and a capital stock cost;
    obtaining market efficiency value added (MEVA) from the weighted average cost of capital based on a net operating profit after tax;
    obtaining socio-environmental value added (SEVA) by evaluating contribution to society and environment in monetary base; and
    obtaining a future inspiration value from the market efficiency value added and the socio-environmental value added.

3. A business performance index processing system causing a computer to perform the calculations for:

    after a planned value of a return on investment (ROI) in a business plan is input to the computer, obtaining a probability distribution of the planned value of ROI based on either a distribution according to a past record of ROI of a target company or another company, or a distribution according to a record of expected ROI or deviations between expected and actual ROIs, or based on both distributions; and
    obtaining a function approximating the probability distribution with a normal distribution or the like.

4. The business performance index processing system according to claim 1 wherein, with a return on investment (ROI) given on an axis, a probability distribution of each of ROI values or a probability density function of a normal distribution or the like approximating the probability distribution, is indicated by means of a distribution diagram.

5. The business performance index processing system according to claim 4, wherein, with a return on investment (ROI) given on an axis, a cumulative probability that coincides with a default probability based on a target credit rating or a borrowing cost is indicated on the distribution diagram that represents a probability distribution of each of ROI values or a probability density function of a normal distribution or the like approximating the probability distribution.

6. The business performance index processing system according to claim 1 wherein, with a profit value given on an axis, a probability distribution of each of profit values or a function approximating the probability distribution by means of a normal distribution or the like, is indicated by means of a distribution diagram.

7. The business performance index processing system according to claim 6, wherein, with a profit value given on an axis, required (optimum) debt and equity values are indicated on the distribution diagram that represents a probability distribution of each of profit values or a function approximating the probability distribution by means of a normal distribution or the like.

8. A business performance index processing system causing a computer to perform the calculations for:

    obtaining a required capital composition (an optimum debt/equity ratio) from a predetermined credit rating, a predetermined default probability, or a predetermined borrowing cost, based on a probability distribution of a return on investment (ROI);
    obtaining a weighted average cost of capital from the required capital composition (the optimum debt/equity ratio), the predetermined borrowing cost, and a predetermined capital stock cost;

obtaining a market efficiency value added from the weighted average cost of capital and a net operating profit after tax calculated through accounting processing;

obtaining socio-environmental value added (SEVA) by evaluating contribution to society and environment in monetary base; and

obtaining future inspiration value (FIV) from the market efficiency value added and the socio-environmental value added.

**9.** A business performance index processing system including:

a calculation process for a borrowing cost, in which the borrowing cost is calculated based on a default probability that is obtained through setting a target credit rating;

a calculation process for a capital stock cost, in which the capital stock cost is calculated from the rate of return that meets with an equity risk and the rate of return on the overall stock market;

a calculation process for a required capital composition, in which the required capital composition (the optimum debt/equity ratio) is calculated based on the default probability used in the calculation process of the borrowing cost, the default probability being based on a probability distribution of a return on investment;

a calculation process for a weighted average cost of capital, in which the weighted average cost of capital is calculated through obtaining a weighted average using the required capital composition (an optimum debt/equity ratio) calculated in the calculation process for the required capital composition (an optimum debt/equity ratio), the borrowing cost calculated in the calculation process for the borrowing cost, and the capital stock cost calculated in the calculation process for the capital stock cost;

a calculation process for a market efficiency value added, in which the market efficiency value added is calculated from the weighted average cost of capital and net operating profit after tax calculated through accounting processing;

a calculation process for a socio-environmental value added, in which the socio-environmental value added is calculated by evaluating a business that is not directly reflected in price or cost in terms of contribution to society and environment in monetary base; and

a calculation process for a future inspiration value, in which a value inherent in a business is calculated by adding the market efficiency value added calculated in the calculation process for the market efficiency value added and the socio-environmental value added calculated in the calculation process for the socio-environmental value added, multiplied by a contribution factor assigned to the value added of the entire business.

**10.** A business performance index processing system comprising:

a first means that calculates and sets a target credit rating;

a second means that calculates a default probability based on the target credit rating calculated and set by the first means;

a third means that calculates a borrowing cost based on the default probability calculated by the second means;

a fourth means that calculates an equity risk based on volatility of a stock price;

a fifth means that calculates a capital stock cost based on the equity risk calculated by the fourth means;

a sixth means that calculates a probability distribution based on a frequency of occurrence of each of different ROI values;

a seventh means that calculates a required capital composition (an optimum debt/equity ratio) from the probability distribution calculated and obtained by the sixth means and the default probability calculated by the second means;

an eighth means that calculates a weighted average cost of capital by taking a weighted average of the borrowing cost calculated and obtained by the third means and the capital stock cost calculated and obtained by the fifth means based on the required capital composition(an optimum debt/equity ratio) calculated and obtained by the seventh means;

a ninth means that calculates market efficiency value added from the weighted average cost of capital calculated and obtained by the eighth means and a net operating profit after tax calculated through accounting processing;

a tenth means that calculates socio-environmental value added by evaluating a business that is not directly reflected in price or cost in terms of contribution to society and environment in monetary base; and

an eleventh means that calculates a future inspiration value by adding the socio-environmental value added calculated and obtained by the tenth means, multiplied by a contribution factor assigned to a value added of an entire business, to the market efficiency value added calculated by the ninth means.

**11.** The business performance index processing system according to claim 1 wherein the calculation processes for obtaining the market efficiency value added, the socio-environmental value added, and the future inspiration value are carried out for a plurality of operating departments within an enterprise.

**12.** The business performance index processing system according to claim 2 wherein a management is to set the contribution factor assigned to the value added of the entire business, by which the socio-environmental value added is multiplied, in consideration of two factors, one being a regression analysis of past data in terms of a relationship between the socio-environmental value added and the market efficiency value added and shareholder value and the other being the degree of interest of stockholders in the socio-environmental value added as investigated through questionnaire or the like.

**13.** A business performance index processing system that performs the processing of:

creating a database that stores a distribution of operating profits based on past financial data;
entering financial data for a future business plan;
obtaining an evaluation value of a business to be invested from the database and the business plan financial data; and
making an investment decision based on the evaluation value of the business to be invested.

**14.** A business performance index processing system including:

a financial database that stores financial data of existing companies,

wherein the system performs the processing of:

calculating an operating profit based on the financial database;
estimating an operating profit for a subsequent term using a regression analysis based on the operating profit;
calculating an estimation error from the estimated operating profit and the actual operating profit;
classifying groups of existing companies in terms of key factors;
inputting financial data of a new business plan;
calculating a distribution of a net operating profit after tax based on the database of a group of companies having the same key factors;
calculating a weighted average cost of capital by obtaining a required capital composition (an optimum debt/equity ratio) from the distribution;
calculating a cost of capital from the weighted average cost of capital;
calculating a market efficiency value added by subtracting a tax and the cost of capital from the estimated operating profit; and
making an investment decision by evaluating a value of an enterprise to be invested in with reference to a predetermined criterion.

**15.** A business performance index processing system that performs the processing of:

calculating an estimation error of an operating profit based on past financial data of a plurality of operating departments within an enterprise;
entering financial data of a specific operating department within an enterprise;
calculating an evaluation value of the specific operating department from the estimation error and the financial data of the specific operating department; and
making an investment decision based on the evaluation value of the specific operating department.

**16.** A business performance index processing system including:

a financial database that stores financial data of all operating departments of existing listed companies,

wherein the system performs the processing of:

calculating an operating profit based on the financial database;
estimating an operating profit using a regression analysis based on the database storing operating profits;
entering financial data of a specific operating department within the company;

calculating an estimation error;

classifying the database in terms of key factors;

calculating a probability distribution of operating profits based on the database upon entering a planned value for the operating profit; and

obtaining a required capital composition (an optimum debt/equity ratio) from a ROI distribution, calculating a weighted average cost of capital, subtracting a cost of capital, and evaluating a business value of the specific operating department within the company with reference to a predetermined criterion to make a business investment decision.

17. In a business performance index processing system, a method of calculating a weighted average cost of capital through taking a weighted average by performing processing for dividing an invested capital required by a new business into a virtually required debt and capital using a probability distribution of a return on invested capital and a default probability in association with a credit rating that serves as a basis for a capital stock cost and a borrowing cost of an enterprise to be invested, and by weighting the capital stock cost and the borrowing cost using a ratio between the required debt and capital.

18. A business performance index processing system causing a computer to perform the calculations for:

obtaining a market efficiency added value;

obtaining a net present value (NPV) by discounting the market efficiency added value at weighted average cost of capital; and

obtaining a cumulative NPV by adding up the NPVs.

19. A system for processing business performance index using a computer, comprising:

a file that stores therein information relating to credit rating and default probability;

a file that stores therein information relating to stock prices;

a file that stores therein information relating to a ratio of a value of profit to an invested capital (ROI);

a file that stores therein information relating to a profit after tax;

an input unit, with which information to be stored in any of these files is input or a command for inputting of the information is issued;

a processing unit that performs the calculations, in relation to the information stored in these files, for obtaining a required capital composition (an optimum debt/equity ratio) of an invested capital based on a probability distribution of a return on investment, obtaining a weighted average cost of capital based on the capital composition, a borrowing cost, and obtaining a capital stock cost, and a market efficiency value added from the weighted average cost of capital and a net operating profit after tax; and

an output unit that is to produce an output of a result of processing performed by the processing unit, the unit being provided with at least a display unit.

20. The system for processing business performance index using a computer according to claim 19, further comprising:

a file that stores therein information relating to socio-environmental value added, wherein the processing unit is further provided with functions of performing calculations for obtaining the socio-environmental value added by evaluating contribution of a business to society and environment in monetary base and obtaining future inspiration value from the market efficiency value added and the socio-environmental value added.

21. The system for processing business performance index using a computer according to claim 19, wherein, with a return on investment (ROI) given on an axis, the output unit displays by means of a distribution diagram a probability distribution of each of ROI values or a probability density function of a normal distribution or the like approximating the probability distribution.

22. The system for processing business performance index using a computer according to claim 19, wherein, with a profit value given on an axis, the output unit displays by means of a distribution diagram a probability distribution of each of profit values or a function approximating the probability distribution by means of a normal distribution or the like.

23. The system for processing business performance index using a computer according to claim 19, wherein the output unit displays required debt and equity values on a distribution diagram that represents, with a profit value given on an axis, a probability distribution of each of profit values or a function approximating the probability distribution by means of a normal distribution or the like.

# FIG. 1

100 — SET CREDIT RATING

110 — CALCULATE BUSINESS RISK
(1) HISTORICAL METHOD
(2) SIMULATION METHOD

106 — CALCULATE EQUITY RISK $\beta$ BASED ON FLUCTUATION OF STOCK PRICE

102 — CALCULATE DEFAULT PROBABILITY

112 — CALCULATE REQUIRED CAPITAL COMPOSITION (DEBT/EQUITY RATIO)
(D/E)

108 — CALCULATE CAPITAL STOCK COST
(Re)

104 — CALCULATE BORROWING COST
(Rd)

114 — CALCULATE WEIGHTED AVERAGE COST OF CAPITAL

120 — TANGIBLE INDEX

122 — CALCULATE MARKET EFFICIENCY VALUE ADDED (MEVA)

130 — INTANGIBLE INDEX

132 — CALCULATE SOCIO-ENVIRONMENTAL VALUE ADDED (SEVA)

150 — FUTURE INSPIRATION VALUE (FIV)

160 — PROCESSING PERFORMED BASED ON FIV:
1. RELATE MANAGEMENT OF PERFORMANCE EVALUATION WITH INCENTIVES WITHIN A COMPANY
2. INCORPORATE RISK (UNCERTAINTY) EVALUATION IN INVESTMENT AND WITHDRAWAL GUIDELINES
3. APPROPRIATERY CREATE BUSINESS PORTFOLIO (SELECTION AND CONCENTRATION)
4. MAKE CAPITAL/DEBT COMPOSITION (FINANCING) APPROPRIATE
5. BRING SUSTAINABLE GROWTH TO COMPANY IN HARMONY WITH THE SOCIETY

## FIG. 2

## FIG. 3

| CREDIT RATING | DEFAULT PROBABILITY | BORROWING COST |
|---|---|---|
| AAA | 0.001% | 1.5% |
| AA | 0.01% | 1.6% |
| A | 0.1% | 1.7% |
| BBB | 0.3% | 2.2% |
| BB | 3% | 5.2% |
| B | 15% | 15% |
| C | 30% | 30% |

# FIG. 4

# FIG. 5

## FIG. 6

PROBABILITY DISTRIBUTION vs ROI LEVEL (%)

## FIG. 7

PROBABILITY DISTRIBUTION vs DEVIATION OF EXPECTED AND ACTUAL ROIs (%)

# FIG. 8

# FIG. 9

## FIG. 10

PROBABILITY DISTRIBUTION OF PROFIT ABSOLUTE VALUE

EXPECTED VALUE

STANDARD DEVIATION

PROBABILITY

0.026
0.019
0.013
0.006
0.000

−4,000   −1,500   0   1,000   3,500   6,000   0

PROFIT ABSOLUTE VALUE

PROBABILITY OF
GOING INTO RED

# FIG. 11

# FIG. 12

# FIG. 13

SYSTEM CONFIGURATION DIAGRAM

## FIG. 14

START

INPUT CREDIT RATING AND DEFAULT PROBABILITY DATA (BUY DISCLOSED INFORMATION) — 202

INPUT BORROWING COST DATA (BUY DISCLOSED INFORMATION) — 204

CREATE TABLE SHOWN IN FIG. 3 AND RECORD THE DATA IN DATA FILE 180 — 206

END

## FIG. 15

(DETAILED FLOW OF FIG. 1)

100

START

READ TABLE OF FIG. 3 FROM DATA FILE AND DISPLAY IT ON OUTPUT UNIT 172 — 302

INPUT TARGET CREDIT RATING (RETAINED IN TEMPORARY STORAGE UNIT 176) — 304

CALCULATE DEFAULT PROBABILITY FROM DATA ON TABLE OF FIG. 3 (RETAINED IN TEMPORARY STORAGE UNIT 176) — 102

CALCULATE BORROWING COST FROM DATA ON TABLE OF FIG. 3 (RETAINED IN TEMPORARY STORAGE UNIT 176) — 104

# FIG. 16

(DETAILED PROCESSING FLOW OF FIG. 1)

( START )

**106**

312 — RECEIVE FLUCTUATION OF PAST TOKYO STOCK PRICES AND THAT OF STOCK PRICES TO BE EVALUATED FROM EXTERNAL DB

314 — CREATE AND DISPLAY DISTRIBUTION GRAPH OF FIG. 4. DISPLAY $\beta$ VALUE ON GRAPH

316 — VALIDATE $\beta$ VALUE BY OPERATING RETURN KEY ON DISPLAY SCREEN (OR BUY DISCLOSED INFORMATION) SO AS TO STORE IT IN TEMPORARY STORAGE UNIT 176

**108**

318 — INPUT Rf

320 — CALCULATE CAPITAL STOCK COST (Re) (EQUATION 9)

110 — PERFORM CALCULATION PROCESS OF ROI PROBABILITY FREQUENCY AND CREATE GRAPH OF FIG. 2 (DETAILED FLOW TO BE DESCRIBED LATER)

**112**

322 — INPUT SETTING VALUE OF DEFAULT PROBABILITY OF ENTERPRISE TO BE EVALUATED

324 — CALCULATE REQUIRED CAPITAL COMPOSITION BASED ON RESULTS OF CALCULATION PERFORMED IN STEP 110

114 — CALCULATE WEIGHTED AVERAGE COST OF CAPITAL USING EQUATION 5

120 — INPUT PROFIT AFTER TAX OR USE PEAK VALUE OF FIG. 2

122 — MEVA CALCULATION, EQUATIONS (6), (10), (11)

330 — DISPLAY FIG. 11 OR 12

# FIG. 17

(DETAILED PROCESSING FLOW OF FIG. 1)

130 — 342
DETERMINE INVESTMENT ITEMS FOR SEVA. TYPICAL INVESTMENT ITEMS INCLUDE:
(1) REDUCTION IN AMONT OF GREENHOUSE GAS EMISSIONS
(2) REDUCTION IN INDUSTRIAL WASTE
(3) ENERGY SAVING
(4) RECYCLING
(5) ENHANCING BRAND VALUE
(6) ACQUIRING PATENT

132 — 344
SET MODEL FOR PROFIT TO BE YIELDED OR VALUE OF REDUCED COST ARISING FROM ABOVE INVESTMENT ITEMS

320
TYPICAL MODEL:
PROFIT/REDUCED VALUE = COEFFICIENT × INVESTED VALUE

346
SET COEFFICIENT FOR EACH ITEM BASED ON PAST DATA OR GOVERMENTAL AND OTHER DISCLOSED DATA

348
CALCULATE PROFIT/REDUCED VALUE OF INVESTMENT ITEM BASED ON CALCULATED COEFFICIENT

350
CALCULATE PRESENT PROFIT FROM CALCULATED FUTURE PROFIT OR REDUCED COST VALUE (SEVA)

150 — 352
CALCULATE FIV

354
DISPLAY OR PRINT FIV

END

# FIG. 18

### (PROCESSING OF HISTORICAL METHOD OF STEP 110)

```
          ( START )
```

110 ⌇

INPUT ROI DATA OF PAST 25 YEARS OR DOWNLOAD DISCLOSED INFORMATION AND RETAIN IT IN DATA FILE 186 — 402

CREATE AND DISPLAY GRAPH FROM PAST ROI DATA: FIG. 6 — 404

INPUT EXPECTED AND ACTUAL ROI DATA IN THE PAST OR DOWNLOAD THE DATA FROM ACCOUNTING-RELATED DATABASE — 406

CREATE AND DISPLAY GRAPH FROM EXPECTED AND ACTUAL ROI DATA IN THE PAST: FIG. 7 — 408

INPUT ROI OF BUSINESS PLAN VALUE, E.G. 8% — 410

CREATE AND DISPLAY ROI DISTRIBUTION (FIG. 8) FROM PROCESSING RESULT OF STEP 404 (FIG. 6), PROCESSING RESULT OF STEP 408 (FIG. 7), AND INPUT VALUE OF STEP 410 — 411

# FIG. 19

(PROCESSING OF SIMULATION METHOD OF STEP 110)

```
                    ( START )
```

110 ⌇

412 — CREATE MODEL OF EXOGENOUS VARIABLE FACTORS, SALES, AND PROFIT AND RETAIN IT IN 186

414 — SET COEFFICIENT FOR THE MODEL BASED ON PAST SIMILAR DATA

416 — LET VARIABLE FACTORS FLUCTUATE TO SIMULATE PROFIT FLUCTUATION

418 — FIND PROBABILITY DISTRIBUTION OF PROFIT ABSOLUTE VALUE AND RETAIN AND DISPLAY IT (FIG. 10)

420 — CALCULATE AND DISPLAY ROI DISTRIBUTION FROM DISTRIBUTION OF PROFIT ABSOLUTE VALUE (FIG. 8)

**European Patent Office**

**DECLARATION**

which under Rule 45 of the European Patent Convention shall be considered, for the purposes of subsequent proceedings, as the European search report

**Application Number**

EP 02 01 8913

| The Search Division considers that the present application, does not comply with the provisions of the EPC to such an extent that it is not possible to carry out a meaningful search into the state of the art on the basis of all claims <br> Reason: | CLASSIFICATION OF THE APPLICATION (Int.Cl.7) <br><br> G06F17/60 |
|---|---|

The claims relate to subject-matter excluded from patentability under Article 52(2) and (3) EPC. Given that the claims are formulated in terms of such subject matter or merely specify commonplace features relating to its technological implementation, the search examiner could not establish any technical problem which might potentially have required an inventive step to overcome. Hence it was not possible to carry out a meaningful search into the state of the art (Rule 45 EPC; see also Guidelines for Examination in the EPO, Part B, Chapter VIII, 1-6).

The applicant's attention is drawn to the fact that a search may be carried out during examination following a declaration of no search under Rule 45 EPC, should the problems which led to the declaration being issued be overcome (see EPC Guideline C-VI, 8.5).

| Place of search | Date | Examiner |
|---|---|---|
| MUNICH | 27 December 2002 | Barba, M |

EPO FORM 1504 (P04C37)